Europäisches Patentamt

European Patent Office

Office européen des brevets

(11) Veröffentlichungsnummer: **0 166 957**
A2

## (12) EUROPÄISCHE PATENTANMELDUNG

(21) Anmeldenummer: 85106480.8

(22) Anmeldetag: 25.05.85

(51) Int. Cl.⁴: **B 29 D 30/30**

(30) Priorität: 05.07.84 DE 3424713

(43) Veröffentlichungstag der Anmeldung:
08.01.86 Patentblatt 86/2

(84) Benannte Vertragsstaaten:
AT BE CH DE FR GB IT LI LU NL SE

(71) Anmelder: Continental Gummi-Werke
Aktiengesellschaft
Königsworther Platz 1
D-3000 Hannover 1(DE)

(72) Erfinder: Gerloff, Klaus H, Dipl.-Ing.
Tischbeinstrasse 5
D-3004 Isernhagen(DE)

(72) Erfinder: Sergel, Horst, Dipl.-Ing.
Fuchsrain 20 A
D-3000 Hannover 51(DE)

(54) Reifenaufbaumaschine.

(57) Die Erfindung geht von einer Reifenaufbaumaschine aus, bei der der Reifenlaufstreifen von einem sich im Sinne der Trommeldrehung fortbewegenden festen Auflager der Reifenaufbautrommel übergeben wird. Um ein ordnungsgemäßes Auflegen des Reifenrohlaufstreifens auch dann sicherzustellen, wenn Laufstreifen benutzt werden müssen, die sich bezüglich ihrer Abmessung voneinander unterscheiden, ist aufgrund der Erfindung der Durchmesser der Reifenaufbautrommel auf die von Fall zu Fall zu messende Länge des unverrückbar auf der festen Unterlage angeordneten Laufstreifens einstellbar. Wichtig ist auch, daß ein festes Übersetzungsverhältnis zwischen den Antrieben der Reifenaufbautrommel und der festen Auflage vorgesehen ist.

FIG. 1

EP 0 166 957 A2

## Reifenaufbaumaschine

Die Erfindung betrifft eine Reifenaufbaumaschine, wobei der Reifenlaufstreifen von einem sich im Sinne der Trommeldrehung fortbewegenden festen Auflager der Reifenaufbautrommel übergeben wird.

Diese Reifenaufbaumaschinen haben den Vorteil, daß der auf Länge geschnittene Reifenlaufstreifen im wesentlichen verzerrungsfrei auf die Reifenaufbautrommel in der Weise übergeben werden kann, daß eine ordnungsgemäße Auflage sichergestellt ist, wobei zu fordern ist, daß die Enden des Laufstreifens ohne Zutun der Bedienungsperson satt und stumpf voreinanderliegen. Dieses Ziel läßt sich jedoch nur dann erreichen, wenn Trommeldurchmesser einerseits und Laufstreifenlänge andererseits genau zueinander passen bzw. einander entsprechen. Dieses Ziel läßt sich jedoch in der Praxis nicht verwirklichen, weil Laufstreifen relativ großen Toleranzen, sei es bei der Herstellung und/oder der Handhabung hiernach unterworfen sind.

Der Erfindung liegt im wesentlichen die Aufgabe zugrunde, eine Maschine der eingangs erwähnten Art vorzuschlagen, bei der ein ordnungsgemäßes Auflegen des Reifenrohlaufstreifens auch dann sichergestellt ist, wenn die Laufstreifen mit Toleranzen angeliefert werden, also Laufstreifen benutzt werden müssen, die sich maßlich voneinander unterscheiden.

Zur Lösung dieser Aufgabe ist erfindungsgemäß der Durchmesser der Reifenaufbautrommel auf die von Fall zu Fall zu messende Länge des unverrückbar auf der festen Unterlage angeordneten Laufstreifens einstellbar. Außerdem ist ein festes Übersetzungsverhältnis zwischen dem Antrieb der Reifenaufbautrommel und dem Antrieb der festen Auflage vorgesehen.

Die Erfindung geht von der Erkenntnis aus, daß es aus physikalischen und/oder chemischen Gründen nicht möglich ist, einer Reifenaufbaumaschine Laufstreifen zuzuführen, die sich bezüglich ihrer Maße nur durch sehr kleine Toleranzen voneinander unterscheiden. Werden nunmehr bei Benutzung einer erfindungsgemäßen Reifenaufbaumaschine unterschiedlich beschaffene Laufstreifen angeliefert, so werden die auf der festen Unterlage befindlichen Laufstreifen zunächst vermessen, was elektronisch oder in anderer Weise geschehen kann. Alsdann erfolgt eine auf die so ermittelte Länge des Rohlaufstreifens abgestimmte Veränderung des Trommeldurchmessers, wobei gewöhnlich eine Vergrößerung des Trommeldurchmessers erfolgt und demgemäß die hierauf schon befindlichen übrigen Teile des Reifenrohlings gedehnt werden. Ist nunmehr die Reifenaufbautrommel auf den zum Übernehmen vorgesehenen Laufstreifen vorbereitet, so kann durch eine Synchronbewegung die Anlage des Rohlaufstreifens erfolgen, die dadurch sichergestellt ist, daß ein festes Übersetzungsverhältnis zwischen dem Antrieb der Reifenaufbautrommel und dem Antrieb der festen Auflage für den Rohlaufstreifen gegeben ist.

Es hat sich weiterhin als vorteilhaft erwiesen, wenn erfindungsgemäß der Trommeldurchmesser nicht schlechthin in Abhängigkeit von der Länge des vorgelegten Laufstreifens geändert wird, sondern in Abhängigkeit von der Länge der neutralen Biegelinie des Laufstreifens. Diese Einstellung des Trommeldurchmessers kann zwar zu Zwangsverformungen des Reifenlaufstreifens führen, jedoch ist die Zugrundelegung der Länge der neutralen Biegelinie des Laufstreifens vergleichsweise genauer. Es versteht sich, daß die Meßeinrichtung für die Feststellung der Laufstreifenlänge auf die Messung der neutralen Ebene bzw. Biegelinie des Laufstreifens abgestimmt sein muß, was in Abhängigkeit von der Querschnittsgestalt des Laufstreifens, z.B. durch einen Korrekturfaktor geschehen kann.

Unter gewissen Voraussetzungen ist es weiterhin zweckmäßig, wenn auch das Übersetzungsverhältnis zwischen dem Antrieb der Trommel und dem Antrieb des festen Auflagers verändert werden kann. Eine solche Veränderung soll selbstverständlich nicht vorgesehen werden, wenn die eigentliche Arbeitsbewegung vollzogen wird. Für diese Zeitspanne soll das Übersetzungsverhältnis konstant bleiben.

Weitere Einzelheiten der Erfindung werden anhand der Zeichnung erläutert, in der ein Ausführungsbeispiel dargestellt ist. Es zeigen:

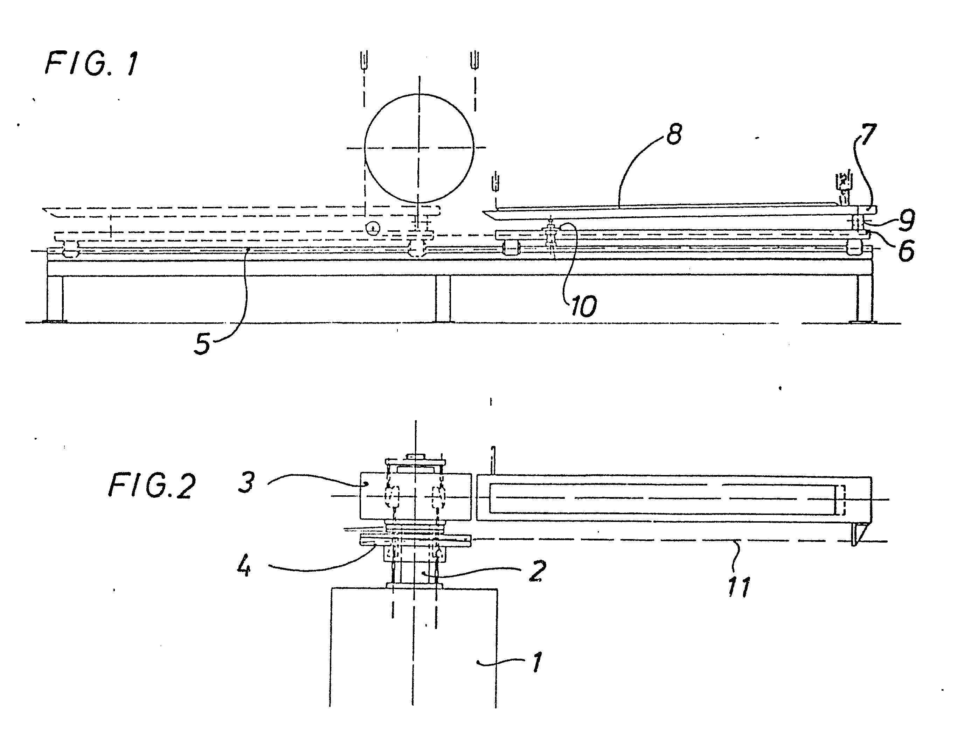

Fig. 1 eine schematisch dargestellte Reifenaufbaumaschine für Fahrzeugluftreifen und

Fig. 2 eine Teildraufsicht auf die Maschine gemäß Fig. 1.

An einem Maschinenständer 1 ist ein drehbar gelagerter Wellenstummel 2 angeordnet, der an seinem freien Ende eine zum Aufbau eines Reifengürtels dienende Trommel 3 aufweist, die in üblicher Weise segmentiert und mit einem Verstellmechanismus versehen ist, um den Außendurchmesser der Trommel 3 zu verändern.

Auf dem Wellenstummel 2 ist ferner eine Seiltrommel 4 gelagert, deren Außendurchmesser ebenfalls veränderbar ist, und zwar so, daß bei Änderungen des Durchmessers der Trommel 3 eine entsprechende Änderung der Seiltrommel 4 gegeben ist. Vorzugsweise soll dabei der effektive Durchmesser der Seiltrommel 4 stets dem wirksamen Durchmesser der Trommel 3 entsprechen.

Unterhalb der Trommel 3 befindet sich eine quer zum Wellenstummel 2 verlaufende Führung 5 für einen Schlitten 6, auf dem eine brettartige, starre Auflage 7 für den Reifenlaufstreifen 8 angeordnet ist. Am hinteren Ende ist die Auflage 7 um eine Querachse 9 verschwenkbar angeordnet. Die Stellung der Auflage 7 kann dabei durch einen Zylinder 10 verändert werden.

Nach dem Aufbringen des Laufstreifens 8 auf die Auflage 7 erfolgt eine Längenmessung des Laufstreifens 8. Das Meßergebnis führt zu einer Durchmesserveränderung der Trommel 3 und damit auch der koaxial hierzu angeordneten Seiltrommel 4, deren Seil 11 bei einer Drehung des Wellenstummels 2 nunmehr den Schlitten 6 mit dem Laufstreifen 8 unter die Trommel 3 bewegt. Durch eine Hubbewegung mit Hilfe des Zylinders 10 wird die Außenfläche der Trommel 3 mit dem Laufstreifen 8 in Verbindung gebracht in der Weise, daß mit fortschreitender Längsbewegung des Auflagers 7 der Laufstreifen 8 von der Trommel 3 übernommen wird. Hat die Trommel 3 eine Umdrehung vollzogen und hat das Auflager 7 die gestrichelte Stellung eingenommen, so ist der Laufstreifen 8 von der Trommel 3 übernommen worden.

Es sei noch darauf hingewiesen, daß vor dem Auflegen des Laufstreifens 8 die Trommel 3 mit den Cordgewebelagen zur Bildung des Reifengürtels belegt worden ist. Wird anstelle der zum Aufbau des Gürtels verwendeten Trommel 3 eine zum Aufbau einer Karkasse dienende Trommel benutzt, so ergibt sich eine sinngemäße Ausbildung.

Es sei weiterhin darauf hingewiesen, daß das Auflager 7 mit spitzen Vorsprüngen, z.B. Spikes ausgestattet sein kann, um sicherzustellen, daß bei einer Längsbewegung des Laufstreifens 8 Lageveränderungen ausgeschlossen sind. Der Laufstreifen 8 ist also im wesentlichen unverrückbar gelagert.

Weiterhin ist es vorteilhaft im Hinblick auf die Verformung des Laufstreifens, daß das Übersetzungsverhältnis zwischen Antrieb und Trommel 3 in Abhängigkeit von der Raumtemperatur und der Temperatur des Laufstreifens 8 verändert werden kann. Dadurch wird eine optimale Anpassung an die temperaturabhängige Verformungsmöglichkeit des Laufstreifens erreicht.

0166957

## Ansprüche:

1. Reifenaufbaumaschine, wobei der Reifenlaufstreifen von einem sich im Sinne der Drehung der Reifenaufbautrommel fortbewegenden festen Auflager der Reifenaufbautrommel übergebbar ist, dadurch gekennzeichnet, daß der Durchmesser der Reifenaufbautrommel (3) auf die von Fall zu Fall gemessene Länge des unverrückbar auf dem festen Auflager (7) angeordneten Laufstreifens (8) einstellbar und ein festes Übersetzungsverhältnis zwischen den Antrieben der Reifenaufbautrommel und dem Auflager vorgesehen ist.

2. Reifenaufbaumaschine nach Anspruch 1, dadurch gekennzeichnet, daß das Übersetzungsverhältnis veränderbar ist, und zwar gegebenenfalls auch in Abhängigkeit von der Raum- und Laufstreifentemperatur.

3. Reifenaufbaumaschine nach Anspruch 1, dadurch gekennzeichnet, daß der Durchmesser der Reifenaufbautrommel (3) in Abhängigkeit von der Länge der neutralen Biegeebene des Laufstreifens (8) einstellbar ist.

4. Reifenaufbaumaschine nach Anspruch 1, dadurch gekennzeichnet, daß das brettartig ausgeführte Auflager (7) um eine parallel zur Drehachse (2) der Reifenaufbautrommel (3) verlaufende Achse (9) vorzugsweise mittels Hubzylinder (10) verschwenkbar ist.

5. Reifenaufbaumaschine nach Anspruch 1, dadurch gekennzeichnet, daß das Auflager (7) und die Reifenaufbautrommel (3) mittels Seilzug und Seilscheiben gekuppelt sind.

Hannover, den 4. Juli 1984
84-40 P/D          D/Fr

FIG.1

FIG.2

Continental
Gummi - Werke AG